# EUROPÄISCHE PATENTSCHRIFT

(11) **EP 0 993 400 B1**
(45) Veröffentlichungstag und Bekanntmachung des Hinweises auf die Patenterteilung: **30.01.2002**
(21) Anmeldenummer: 98940185.6
(22) Anmeldetag: 08.07.1998
(51) Int. Cl.: B60T 13/72, B60T 13/52

(54) **SENSORANORDNUNG FÜR EINEN BREMSKRAFTVERSTÄRKER UND DAMIT AUSGERÜSTETER BREMSKRAFTVERSTÄRKER**
SENSOR ASSEMBLY FOR SERVOBRAKE AND SERVOBRAKE FITTED WITH SUCH SENSOR ASSEMBLY
ENSEMBLE CAPTEUR POUR SERVOFREIN, ET SERVOFREIN EQUIPE D'UN TEL ENSEMBLE CAPTEUR

(30) Priorität: 08.07.1997 DE 19729158
(43) Veröffentlichungstag der Anmeldung: 19.04.2000
(73) Patentinhaber: LUCAS INDUSTRIES PUBLIC LIMITED COMPANY, Solihull B90 4LA (GB)
(72) Erfinder: GILLES, Leo, D-56077 Koblenz (DE)
(74) Vertreter: Beyer, Andreas, Dr.
(86) Internationale Anmeldenummer: EP9804250
(87) Internationale Veröffentlichungsnummer: WO9902385

(56) Entgegenhaltungen:
- EP-A- 0 706 924

## Beschreibung

Die Erfindung betrifft einen insbesondere elektromagnetisch betätigbaren Unterdruck-Bremskraftverstärker mit einer Sensoranordnung.

Unterdruck-Bremskraftverstärker mit einer elektromagnetischen Betätigungseinheit sind bekannt, beispielsweise aus der DE 40 28 290 C1. Bremskraftverstärker der genannten Art sind mit einer elektromagnetischen Betätigungseinheit ausgerüstet, um zusätzlich oder alternativ zur normalen, fußkraftproportionalen Betätigung durch den Fahrer eines Fahrzeuges die Fahrzeugbremsanlage durch Ansteuern des Bremskraftverstärkers zu betätigen. Auf diese Weise können zum einen vollständig automatisch, also ohne jegliches Zutun des Fahrers ablaufende Bremsungen realisiert werden und zum anderen kann ein durch den Fahrer eingeleiteter Bremsvorgang unterstützt werden, was in bestimmten Situationen vorteilhaft ist, beispielsweise bei einer Notfallbremsung zur Vermeidung einer Kollision. Untersuchungen haben ergeben, daß die meisten Fahrer in kritischen Situation nicht genügend stark auf das Bremspedal treten, wodurch der Bremsweg unnötigerweise verlängert wird. Die erwähnte elektromagnetische Betätigungseinheit bietet in einem solchen Fall die Möglichkeit, den Bremskraftverstärker unabhängig von der Fußbetätigungskraft des Fahrers beispielsweise voll auszusteuern und dadurch die maximal mögliche Bremskraftunterstützung zur Verfügung zu stellen (sogenannter Bremsassistent). Lösungen dieser Art werden bereits in Serienfahrzeugen eingesetzt.

Um zu erkennen, wann eine Bremsung eine Notfallbremsung ist und wann demzufolge die elektromagnetische Betätigungseinheit des Bremskraftverstärkers anzusteuern ist, aber auch zur Realisierung vollständig automatisch ablaufender Bremsungen, beispielsweise im Zusammenwirken mit einem Abstandsregelungssystem, ist die Kenntnis der momentan im Bremskraftverstärker vorherrschenden Druckverhältnisse erforderlich, die einem dem Bremskraftverstärker zugehörigen, in der Regel elektronischen Steuergerät zugeleitet werden, das bestimmte Parameter des Bremskraftverstärkers und/oder eines damit verbundenen Hauptbremszylinders verarbeitet, um die elektromagnetische Betätigungseinheit in der gewünschten Weise zu steuern. Üblicherweise ist ein solches Steuergerät entfernt vom Bremskraftverstärker angeordnet und steht mit letzterem über elektrische Leitungen in elektrischer Verbindung und ggf. über Schläuche oder Rohre in Fluidverbindung. In der EP 0 306 721 B1 ist vorgeschlagen worden, das Steuergerät im Gehäuse des Bremskraftverstärkers unterzubringen. Eine solche Lösung erfordert jedoch ein speziell ausgestaltetes Bremskraftverstärkergehäuse und läuft somit einer rationellen Serienfertigung von unterschiedlichen Bremskraftverstärkern zuwider.

Die Kenntnis der momentan in einem Unterdruck-Bremskraftverstärker vorherrschenden Druckverhältnisse kann aber auch aus anderen Gründen erwünscht sein, auch bei einem nicht elektromagnetisch betätigbaren Unterdruck-Bremskraftverstärker.

Aus der EP-A-0 760 924 ist ein elektronisch gesteuerter Unterdruck-Bremskraftverstärker mit einem Gehäuse bekannt, das durch zwei bewegliche Wände in zwei Unterdruckkammern und zwei Arbeitskammern aufgeteilt wird. Wie bei Unterdruck-Bremskraftverstärkern üblich, kann jede Arbeitskammer mittels eines Steuerventiles wahlweise mit Unterdruck oder mit wenigstens Atmosphärendruck verbunden werden. Um im Betrieb des Bremskraftverstärkers die herrschende Differenz zwischen dem Druck in der Unterdruckkammer und dem Druck in der Arbeitskammer zu ermitteln, ist in der einen beweglichen Wand des Bremskraftverstärkers ein Differenzdrucksensor angeordnet.

Der Erfindung liegt daher die Aufgabe zugrunde, einen Unterdruck-Bremskraftverstärker mit einer Sensoranordnung bereitzustellen, deren konstruktiver Aufbau möglichst kompakt ist und deren funktionelle und elektrische Anbindung an einen Unterdruck-Bremskraftverstärker vereinfacht ist.

Diese Aufgabe ist erfindungsgemäß mit einem Unterdruck-Bremskraftverstärker gelöst, der die im Anspruch 1 angegebenen Merkmale aufweist. Die Sensoranordnung des erfindungsgemäßen Unterdruck-Bremskraftverstärkers zeichnet sich dadurch aus, daß die gesamte Sensorik und Sensoranschlußtechnik, die zum Ermitteln der momentan im Bremskraftverstärker vorherrschenden Druckverhältnisse erforderlich ist, in die Sensoranordnung integriert ist, so daß die Sensoranordnung in äußerst montagefreundlicher Weise direkt am Bremskraftverstärker anflanschbar ist. Die direkte Anflanschung der Sensoranordnung am Bremskraftverstärker ist aber nicht nur montagefreundlich und darüber hinaus platzsparend, sondern sie hat auch kurze und damit störunanfällige Verbindungswege der elektrischen Leitungen und der Fluidverbindungen zur Folge. Die Sensoranordnung des erfindungsgemäßen Bremskraftverstärkers ist, angeschlossen an ein Steuergerät, das in die Sensoranordnung integriert sein kann, dazu in der Lage, mittels ihres Differenzdrucksensors und der beiden Luftführungskanäle die an der bzw. einer beweglichen Wand des Bremskraftverstärkers jeweils wirkende Druckdifferenz festzustellen und daraus die aktuelle Bremskraftverstärkung zu bestimmen.

In einer bevorzugten Ausführungsform des erfindungsgemäßen Bremskraftverstärkers sind beide Luftführungskanäle der Sensoranordnung starr. Bei einer solchen Ausführungsform ist die Sensoranordnung mittels der beiden Luftführungskanäle sowohl funktionell als auch mechanisch mit dem Bremskraftverstärker verbunden.

Vorteilhaft sind der erste und/oder der zweite Luftführungskanal einstückig mit dem Gehäuse der Sensoranordnung ausgebildet, so daß die gesamte, vormontierte Sensoranordnung in einem Arbeitsgang mit dem Bremskraftverstärker verbunden werden kann. Die genannte einstückige Ausführung läßt sich besonders gut erreichen, wenn das Gehäuse der Sensoranordnung ein Kunststoffspritzgußteil ist, an dem die Luftführungskanäle einstückig angeformt sind.

Vorzugsweise sind in dem Gehäuse der Sensoranordnung Haltearme für den Differenzdrucksensor vorhanden, die gemäß einer fertigungstechnisch vorteilhaften Ausführungsform einstückig mit dem Gehäuse und/oder den Luftführungskanälen ausgebildet sind. Der Differenzdrucksensor verrastet bei der Montage mit den Haltearmen, wodurch er ohne weitere Justierungsarbeiten sicher in dem Gehäuse der Sensoranordnung festgehalten ist.

Gemäß einer Ausführungsform des erfindungsgemäßen Bremskraftverstärkers sind die beiden Luftführungskanäle der Sensoranordnung ineinander angeordnet. Beispielsweise umgibt der zweite Luftführungskanal den ersten Luftführungskanal koaxial. Diese Ausführungsform ist platzsparend und benötigt für beide Luftführungskanäle nur eine einzige Durchführungsstelle am Bremskraftverstärkergehäuse.

Vorzugsweise sind die Luftführungskanäle mittels eines insbesondere umlaufenden Rastvorsprunges mit dem Bremskraftverstärkergehäuse verrastbar. Dies ermöglicht eine einfache und sichere Montage der Sensoranordnung am Bremskraftverstärker, da die Luftführungskanäle einfach so weit in das Bremskraftverstärkergehäuse eingeschoben werden, bis sie verrasten, womit dann auch die Sensoranordnung selbst befestigt ist.

Bevorzugt ist der erste Luftführungskanal, der bis in die Arbeitskammer des Bremskraftverstärkers reicht, in seinem arbeitskammerseitigen Endabschnitt mit die Kanalwandung durchsetzenden Öffnungen versehen, die eine Fluidverbindung der Arbeitskammer mit dem ersten Luftführungskanal herstellen. Diese Ausgestaltung erlaubt es, den ersten Luftführungskanal mittels beispielsweise eines Elastomerbalges durch das Bremskraftverstärkergehäuse hindurch fortzusetzen, so daß der erste Luftführungskanal neben seinem primären Zweck der Herstellung einer Fluidverbindung zwischen der Arbeitskammer des Bremskraftverstärkers und dem in der Sensoranordnung vorhandenen Differenzdrucksensor auch noch elektrische Leitungen beherbergen kann, die auf diese Weise platzsparend von der Sensoranordnung bzw. vom Steuergerät durch den Bremskraftverstärker zur elektromagnetischen Betätigungseinheit geführt werden können. Vorteilhaft ist dazu der erste Luftführungskanal so dimensioniert, daß er Platz für die genannten elektrischen Verbindungsleitungen bietet.

Gemäß einer weiteren Ausführungsform des erfindungsgemäßen Bremskraftverstärkers ist am Gehäuse der Sensoranordnung ein stecker- oder buchsenartig ausgebildeter Anschluß für einen weiteren Sensor vorhandenen. Auf diese Weise kann beispielsweise ein Hydraulikdrucksensor einfach angeschlossen werden, der den Hydraulikdruck in zumindest einem Bremskreis einer hydraulischen Fahrzeugbremsanlage als weiteren Parameter dem Steuergerät zuführt. Dadurch läßt sich das Auslöseverhalten eines elektronisch gesteuerten Bremskraftverstärkers verbessern und ein komfortableres Betriebsverhalten erzielen.

Bei einem erfindungsgemäßen Bremskraftverstärker ist bevorzugt die Sensoranordnung am Bremskraftverstärker durch einen oder mehrere Rastvorsprünge befestigt, die auf der Außenseite des zweiten Luftführungskanals (bei koaxialer Anordnung der beiden Luftführungskanäle) oder auf der Außenseite beider Luftführungskanäle umlaufend ausgebildet sind, wobei diese Rastvorsprünge im Inneren des Bremskraftverstärkergehäuses hinter Gummimuffen abdichtend verrastet sind. Die Gummimuffen sind in diejenigen Durchgangsöffnungen in der Bremskraftverstärkergehäusewandung einsetzt, die zum Durchtritt des bzw. der Luftführungskanäle vorhanden sein müssen.

Gemäß einer vorteilhaften Ausgestaltung ist die Sensoranordnung an ihrem stecker- oder buchsenartigen Anschluß mit einem Drucksensor verbunden, der ein V-förmig gewinkeltes Sensorgehäuse aufweist. Das freie Ende des einen Schenkels des V-förmigen Sensorgehäuses ist dabei als mit dem stecker- oder buchsenartigen Anschluß der Sensoranordnung korrespondierender Anschluß ausgeführt, während das freie Ende des anderen Schenkels des V-förmigen Sensorgehäuses einen Anschluß zur Fluidverbindung mit dem Hauptbremszylinder aufweist. Durch eine solche Ausgestaltung kann der Hydraulikdrucksensor bereits am Hauptzylindergehäuse vormontiert werden und der elektrische Anschluß des Hydraulikdrucksensors rastet beim Zusammenfügen von Hauptbremszylinder und Bremskraftverstärker von selbst in den stecker- oder buchsenartigen Anschluß der bereits am Bremskraftverstärker montierten Sensoranordnung ein. Die so hergestellte elektrische Verbindung des Drucksensors mit der Sensoranordnung kann nur gelöst werden, wenn der Hauptbremszylinder wieder vom Bremskraftverstärker getrennt wird, so daß ein ungewolltes Lösen der genannten Verbindung sicher vermieden ist.

Mehrere Ausführungsbeispiele eines erfindungsgemäßen Bremskraftverstärkers mit einer Sensoranordnung werden im folgenden anhand der Figuren näher erläutert. Es zeigt:
- Fig. 1: einen Längsschnitt durch einen erfindungsgemäßen Unterdruck-Bremskraftverstärker mit einer Sensoranordnung, der mit einem Hauptbremszylinder zusammengeflanscht ist,
- Fig. 2: den die Sensoranordnung betreffenden Bereich der Fig. 1 in vergrößerter Darstellung,
- Fig. 3: einen Längsschnitt durch einen erfindungsgemäßen Unterdruck-Bremskraftverstärker, der mit einer abgewandelten Ausführungsform einer Sensoranordnung versehen ist, und
- Fig. 4: einen Längsschnitt durch einen erfindungsgemäßen elektromagnetisch betätigbaren Unterdruck-Bremskraftverstärker, der mit einer nochmals abgewandelten Ausführungsform einer Sensoranordnung versehen ist.

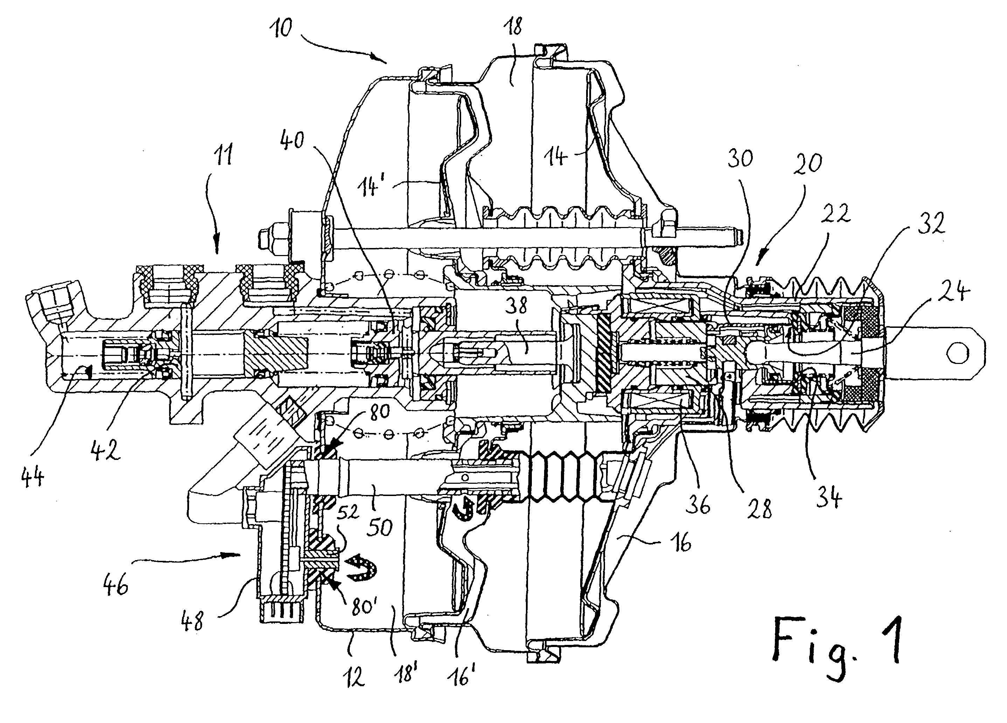

In Fig. 1 ist ein Ausführungsbeispiel eines elektronisch gesteuerten Unterdruckbremskraftverstärkers 10 zusammen mit einem daran angeflanschten Hauptbremszylinder 11 für eine hydraulische Kraftfahrzeugbremsanlage im Überblick veranschaulicht. Der Bremskraftverstärker 10 ist im dargestellten Beispiel als sogenannter Tandem-Bremskraftverstärker ausgeführt, d.h. in seinem im wesentlichen rotationssymmetrischen Gehäuse 12 befinden sich zwei bewegliche Wände 14, 14', die den Innenraum des Bremskraftverstärkergehäuses 12 in je zwei Arbeitskammern 16, 16' und zwei Unterdruckkammern 18, 18' unterteilen. Die beiden Unterdruckkammern 18, 18' sind ständig mit einer hier nicht dargestellten Unterdruckquelle verbunden, beispielsweise mit dem Ansaugtrakt eines Verbrennungsmotors, während die beiden Arbeitskammern 16, 16' durch ein Steuerventil 20 mit einem Gehäuse 22 wahlweise mit Unterdruck oder mit zumindest atmosphärischem Druck verbindbar sind.

Das Steuerventil 20 kann entweder durch den Fahrzeugführer direkt betätigt werden, indem dessen Fußkraft beispielsweise über ein hier nicht dargestelltes, mit einer Krafteingangsstange 24 gekoppeltes Bremspedal in das Steuerventil 20 eingeleitet wird, oder es kann mittels einer elektromagnetischen Betätigungseinheit 26 fußkraftunabhängig betätigt werden. Hierzu hat die elektromagnetische Betätigungseinheit 26 einen im wesentlichen hohlzylindrischen Magnetanker 28, der auf seiner in Fig. 1 rechten Seite starr mit einer Hülse 30 gekoppelt ist, an deren in Fig. 1 rechten Ende ein erster kreisringförmiger Ventilsitz 32 ausgebildet ist, der mit einem elastischen Dichtelement 34 abdichtend zusammenwirkt. Je nach Erregungsgrad einer Magnetspule 36 der elektromagnetischen Betätigungseinheit 26 bewegt sich der Magnetanker 28 bezogen auf Fig. 1 mehr oder weniger weit nach links und hebt dadurch den ersten Ventilsitz 32 vom Dichtelement 34 ab, wodurch eine gesteuerte Zufuhr von Atmosphärendruck zur Arbeitskammer 16 ermöglicht ist.

Werden die Arbeitskammern 16, 16' durch die Funktion des Steuerventils 20 mit Atmosphärendruck (oder mit Überdruck) verbunden, bewegen sich die beiden beweglichen Wände 14, 14' aufgrund der an ihnen entstehenden Druckdifferenz bezogen auf Fig. 1 nach links und üben dabei eine Kraft auf das Steuerventilgehäuse 22 aus, welches diese Kraft über einen Reaktionskolben 38 in den dem Bremskraftverstärker 10 funktionell nachgeschalteten Hauptzylinder 11 weiterleitet, in dem daraufhin durch Verschiebung eines Primärkolbens 40 und eines Sekundärkolbens 42, die in einer Bohrung 44 des Hauptzylindergehäuses angeordnet sind, ein entsprechender Bremsdruck aufgebaut wird. Dieses ist die übliche Funktion des Bremskraftverstärkers 10 mit seinem Steuerventil 20 und des damit verbundenen Hauptzylinders 11, die Fachleuten auf diesem Gebiet allgemein bekannt ist und daher nicht weiter erläutert zu werden braucht.

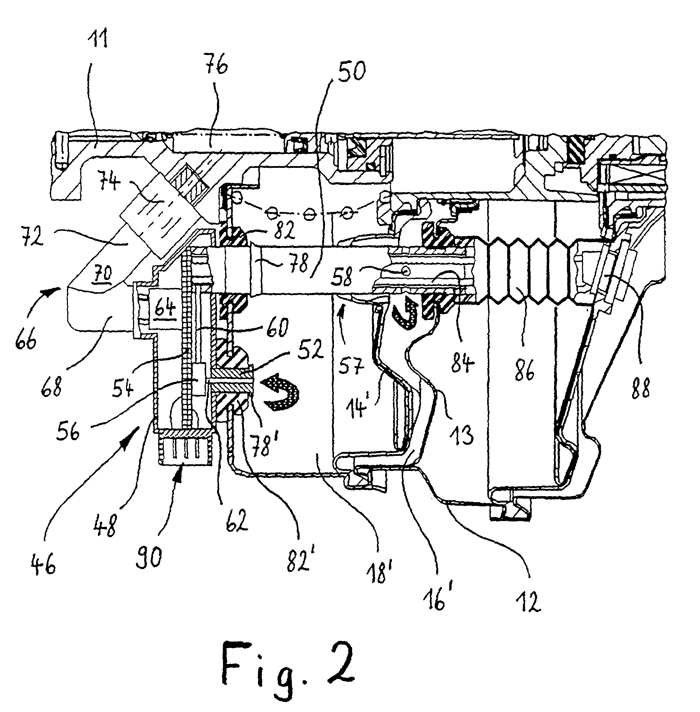

Zur Ansteuerung der elektromagnetischen Betätigungseinheit 26 ist diese über ein elektronisches Steuergerät mit einer Sensoranordnung 46 verbunden. Gemäß Fig. 1 und Fig. 2 ist das elektronische Steuergerät in die Sensoranordnung 46 integriert und kann in Abhängigkeit von Signalen der Sensoranordnung 46 das Steuerventil 20 und damit den Bremskraftverstärker 10 völlig fußkraftunabhängig oder auch in einer die Fahrerfußkraft unterstützenden Weise betätigen. Mit einer solchen Anordnung lassen sich somit auch automatisch ablaufende Fahrzeugbremsungen realisieren.

Die besser aus Fig. 2 ersichtliche Sensoranordnung 46 hat ein Gehäuse 48 aus Kunststoffspritzguß, an dem ein erster, rohrförmiger Luftführungskanal 50 und ein davon beabstandeter, parallel verlaufender und ebenfalls rohrförmiger zweiter Luftführungskanal 52 einstückig angeformt sind. Das Material der beiden Luftführungskanäle 50, 52 ist so gewählt, daß sie beide im wesentlichen starr sind. Der erste Luftführungskanal 50 erstreckt sich von der außerhalb des Bremskraftverstärkergehäuses 12 gelegenen Sensoranordnung 46 in das Bremskraftverstärkergehäuse 12 hinein bis in die Arbeitskammer 16'. Der zweite Luftführungskanal 52 erstreckt sich ebenfalls von der Sensoranordnung 46 bis ins Innere des Bremskraftverstärkergehäuses 12, jedoch endet der zweite Luftführungskanal 52 bereits in der mit der Arbeitskammer 16' zusammenwirkenden Unterdruckkammer 18'.

In dem Gehäuse 48 der Sensoranordnung 46 ist auf einer Elektronikplatine 54 ein Differenzdrucksensor 56 angebracht. Der erste Luftführungskanal 50 stellt über in seinem arbeitskammerseitigen Endabschnitt vorhandene radiale Öffnungen 58 und ein im Gehäuse 48 angeordnetes Verbindungsröhrchen 60 eine Fluidverbindung zwischen der Arbeitskammer 16' und dem Differenzdrucksensor 56 her. Die bewegliche Wand 14', durch die sich der erste Luftführungskanal 50 erstreckt, ist auf der Außenseite des ersten Luftführungskanals 50 bei 57 (sh. Fig. 2) abgedichtet und kann auf dem ersten Luftführungskanal 50 entlang gleiten. Analog stellt der zweite Luftführungskanal 52 über seine endseitige Öffnung in der Unterdruckkammer 18' und ein Verbindungsröhrchen 62 eine Fluidverbindung zwischen der Unterdruckkammer 18' und dem Differenzdrucksensor 56 in der Sensoranordnung 46 her. Die Sensoranordnung 46 ist somit dazu in der Lage, den an der beweglichen Wand 14' jeweils anliegenden Differenzdruck zu erfassen und daraus mittels des nicht dargestellten Steuergerätes, das beispielsweise als Chip auf der Elektronikplatine 54 vorhanden sein kann, die aktuell wirksame Bremskraftunterstützung zu berechnen.

Ergänzend wird im gezeigten Ausführungsbeispiel der Sensoranordnung 46 als weiterer Parameter der jeweils im Primärbremskreis des Hauptbremszylinders 11 anliegende Hydraulikdruck zugeführt. Hierzu weist die Sensoranordnung 46 auf ihrer den beiden Luftführungskanälen 50 und 52 gegenüberliegenden Seite einen buchsenartigen elektrischen Anschluß 64 auf, in den ein entsprechend steckerartig ausgebildeter Anschluß eines Hydraulikdrucksensors 66 eingerastet ist, der sich am freien Ende des einen Schenkels 68 des V-förmig ausgebildeten Gehäuses 70 des Hydraulikdrucksensors 66 befindet. Am freien Ende des anderen Schenkels 72 des Gehäuses 70 weist der Hydraulikdrucksensor 66 einen Anschluß 74 zur druckdichten Flüssigkeitsverbindung mit der Hydraulikfluid enthaltenden Druckkammer 76 des Primärbremskreises auf. Das Hydraulikfluid in der Druckkammer 76 wird bei betätigtem Bremskraftverstärker 10 von dem Primärkolben 40 unter Druck gesetzt.

Der Hydraulikdrucksensor 66 erfaßt den in der Druckkammer 76 herrschenden Fluiddruck und wandelt diesen in ein entsprechendes elektrisches Signal um, das über den Anschluß 64 der Sensoranordnung 46 zugeleitet wird. Auf diese Weise kann der in der Sensoranordnung 46 enthaltene Kleinrechner die Verstärkungsleistung des Bremskraftverstärkers 10 in Abhängigkeit des herrschenden Hydraulikdrucks steuern und damit ein als komfortabel empfundenes Ansprech- und Betriebsverhalten der gesamten Bremskraftverstärker/Hauptzylinder-Einheit sicherstellen.

Zur Befestigung der Sensoranordnung 46 am Bremskraftverstärker 10 weisen die Luftführungskanäle 50, 52 außen je einen umlaufenden Rastvorsprung 78, 78' in einem Bereich auf, der sich bei montierter Sensoranordnung 46 im Inneren des Bremskraftverstärkergehäuses 12 befindet. Die Sensoranordnung 46 läßt sich auf diese Weise durch einfaches Einschieben in zwei Durchgangsöffnungen 80 und 80', die in der Wand des Bremskraftverstärkergehäuses 12 vorhanden sind, am Bremskraftverstärker 10 befestigen. Zur druckdichten Abdichtung der Durchgangsöffnungen 80, 80' ist jeweils eine ringförmige Gummimuffe 82, 82' in die Durchgangsöffnung 80 bzw. 80' eingesetzt, durch die der zugehörige Luftführungskanal 50 oder 52 geführt ist. Da der Außendurchmesser des Luftführungskanals 50 bzw. 52 größer als der Durchmesser der entsprechenden Öffnung in den Gummimuffen 82, 82' ist, dichtet jede Gullimimuffe 82, 82' sowohl gegenüber dem Luftführungskanal als auch gegenüber der Wand des Bremskraftverstärkergehäuses 12 zuverlässig ab. Die Rastvorsprünge 78, 78' sind dabei so gestaltet, daß sie in Einschubrichtung durch die zugehörige Gummimuffe 82, 82' gedrückt werden können und anschließend hinter derselben verrasten, so daß die Sensoranordnung 46 ohne Zerstörung der Gummimuffen 82, 82' nicht mehr vom Bremskraftverstärkergehäuse 12 getrennt werden kann. Die Sensoranordnung 46 ist demzufolge durch die beiden Luftführungskanäle 50 und 52 sowohl mechanisch als auch funktionell mit dem Bremskraftverstärker 10 verbunden.

Im gezeigten Ausführungsbeispiel stellt der erste Luftführungskanal 50 nicht nur eine Fluidverbindung zwischen der Sensoranordnung 46 und der Arbeitskammer 16' her, sondern er dient auch dazu, elektrische Verbindungsleitungen 84 aufzunehmen, die von der Sensoranordnung 46 bzw. des darin befindlichen Steuergerätes zur elektromagnetischen Betätigungseinheit 26 des Bremskraftverstärkers 10 führen. Hierzu ist der erste Luftführungskanal 50 durch einen Elastomerbalg 86 verlängert, dessen in den Figuren linkes Ende Ende sowohl auf dem Luftführungskanal 50 als auch gegenüber einer Zwischenwand 13 des Bremskraftverstärkergehäuses 12 abdichtend angebracht ist und dessen gegenüberliegendes, anderes Ende an der beweglichen Wand 14 des Bremskraftverstärkers 10 abdichtend befestigt ist. Ein in die bewegliche Wand 14 eingesetzter Stopfen 88 aus Elastomermaterial dichtet den ersten Luftführungskanal 50 endseitig ab, umschließt die Verbindungsleitungen 84 dicht und führt sie aus dem ersten Luftführungskanal 50 heraus. Der Durchmesser des ersten Luftführungskanals 50 ist so groß gewählt, daß die in seinem Innern durch die Verbindungsleitungen 84 hervorgerufene Verringerung des freien Querschnitts den Gasaustausch durch den Luftführungskanal 50 nicht behindert.

Hinsichtlich des Zusammenfügens von Bremskraftverstärker 10 und Hauptbremszylinder 11 hat das V-förmig gestaltete Gehäuse 70 des Hydraulikdrucksensors 66 den Vorteil, daß der Hydraulikdrucksensor 66 über seinen Anschluß 74 bereits vor dem genannten Zusammenfügen am Hauptbremszylinder 11 befestigt werden kann und daß dann sein elektrischer Anschluß beim Zusammenfügen von Hauptbremszylinder 11 und Bremskraftverstärker 10 ohne weiteres in den buchsenartigen Anschluß 64 der Sensoranordnung 46 einrastet. Im verbundenen Zustand von Bremskraftverstärker 10 und Hauptbremszylinder 11 hat das V-förmige Gehäuse 70 darüber hinaus den Vorteil, daß der elektrische Anschluß des Hydraulikdrucksensors 66 an der Sensoranordnung 46 sich nicht ungewollt lösen kann.

Zur elektrischen Verbindung der Sensoranordnung 46 mit der übrigen Fahrzeugelektrik und -elektronik ist unten an dem Gehäuse 48 der Sensoranordnung 46 ein Zentralstecker 90 vorhanden.

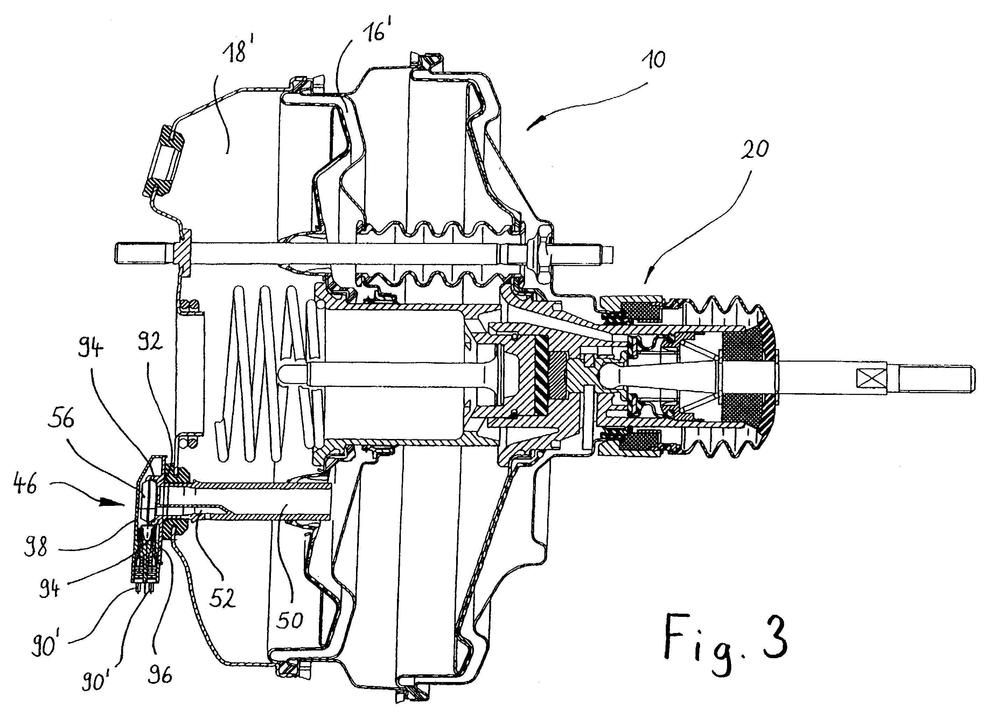

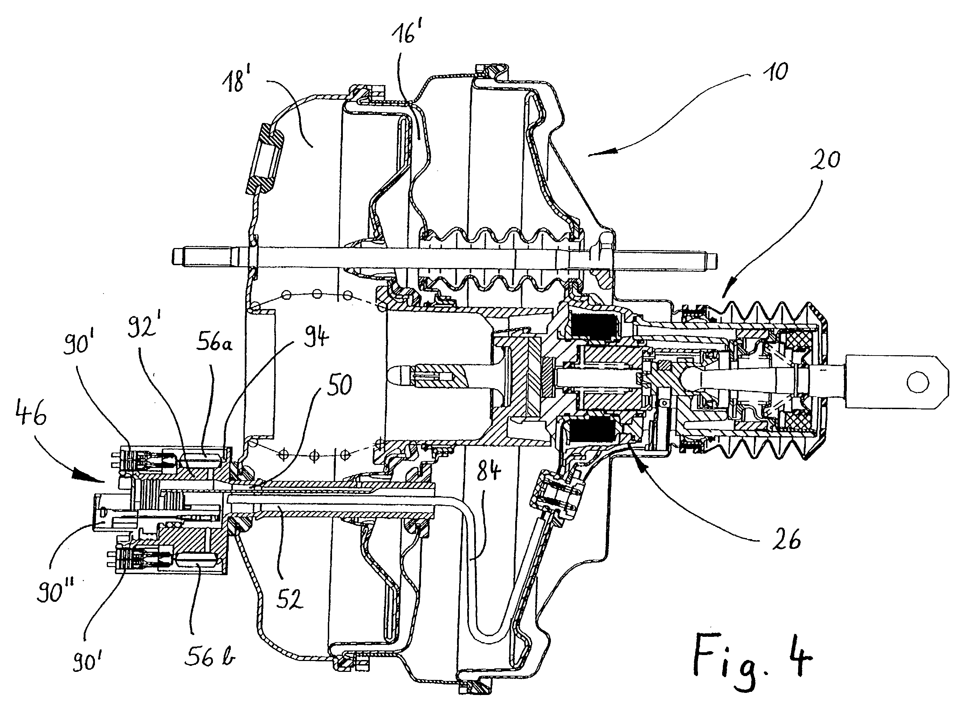

In den Figuren 3 und 4 sind weitere Ausführungsbeispiele der Sensoranordnung 46 wiedergegeben, wobei Fig. 3 eine zweite Ausführungsform einer Sensoranordnung 46 eingebaut in einen Tandem-Unterdruckbremskraftverstärker ohne elektromagnetische Betätigung und Fig. 4 eine dritte Ausführungsform einer Sensoranordnung 46 eingebaut in einen Tandem-Unterdruckbremskraftverstärker mit elektromagnetischer Betätigung zeigt.

Die in Fig. 3 dargestellte Sensoranordnung 46 weist einen im Kunststoffspritzgußverfahren hergestellten Systemträger 92 auf, der den Luftführungskanal 50, den in letzterem angeordneten zweiten Luftführungskanal 52, einstückig mit dem Systemträger 92 ausgebildete Haltearme 94, und eine Rückwand 96 des Gehäuses 48 der Sensoranordnung 46 umfaßt. Der Differenzdrucksensor 56 ist rastend mit den Haltearmen 94 verbunden, wodurch er positionsgenau und sicher in der Sensoranordnung 46 gehalten ist. Steckerkontakte 90', die ebenfalls am Systemträger 92 befestigt sind, sind in der Sensoranordnung 46 elektrisch mit dem Differenzdrucksensor 56 verbunden und dienen zum Anschluß der Sensoranordnung 46 an ein hier nicht dargestelltes elektronisches Steuergerät. Eine Kappe 98, die an der Rückwand 96 befestigt ist, bildet den zweiten Teil des Gehäuses 48 der Sensoranordnung 46.

Das in Fig. 4 dargestellte, dritte Ausführungsbeispiel einer Sensoranordnung 46 unterscheidet sich vom in Fig. 3 wiedergegebenen zweiten Ausführungsbeispiel durch einen anders ausgebildeten Systemträger 92'. Analog dem zweiten Ausführungsbeispiel umfaßt der Systemträger 92' einen zweiten Luftführungskanal 52 und einen darin angeordneten ersten Luftführungskanal 50. Der Differenzdrucksensor ist beim dritten Ausführungsbeispiel jedoch in zwei Drucksensoren 56a und 56b aufgeteilt, von denen der Drucksensor 56a mit dem ersten Luftführungskanal 50 und der Drucksensor 56b mit dem zweiten Luftführungskanal 52 in fluidleitender Verbindung steht. Ebenso wie beim zweiten Ausführungsbeispiel sind die beiden Drucksensoren 56a, 56b mittels Haltearmen 94 im Systemträger 92' eingerastet.

Durch den zweiten Luftführungskanal 52 erstreckt sich gemäß Fig. 4 die elektrische Verbindungsleitung 84 zur elektromagnetischen Betätigungseinheit 26. Diese Verbindungsleitung 84 endet in der Sensoranordnung 46 in einem Stecker 90", der zusätzlich zu den beiden Steckerkontakten 90' vorgesehen ist.

## Patentansprüche

1. Unterdruck-Bremskraftverstärker (10), mit einem Gehäuse (12), das zumindest eine Unterdruckkammer (18, 18') und eine davon durch eine bewegliche Wand (14, 14') getrennte Arbeitskammer (16, 16') aufweist, die wahlweise mit Unterdruck oder mit zumindest Atmosphärendruck verbindbar ist, und mit einer einen Differenzdrucksensor (56) aufweisenden Sensoranordnung (46),
**dadurch gekennzeichnet, daß**
die Sensoranordnung (46) aufweist
- ein außerhalb des Bremskraftverstärkergehäuses (12) angeordnetes Gehäuse (48), in dem der Differenzdrucksensor (56) angeordnet ist,
- einen mit dem Differenzdrucksensor (56) verbundenen, ersten Luftführungskanal (50), dessen Länge dazu ausreicht, sich von der Sensoranordnung (46) bis in die Arbeitskammer (16, 16') des Bremskraftverstärkers (10) zu erstrecken, und
- einen mit dem Differenzdrucksensor (56) verbundenen, zweiten Luftführungskanal (52), dessen Länge dazu ausreicht, sich von der Sensoranordnung (46) bis in die Unterdruckkammer (18, 18') des Bremskraftverstärkers (10) zu erstrecken,
und daß das Gehäuse (48) der Sensoranordnung (46) beide Luftführungskanäle (50, 52) trägt und mittels der Luftführungskanäle (50, 52) am Bremskraftverstärker (10) befestigt ist.

2. Bremskraftverstärker nach Anspruch 1,
**dadurch gekennzeichnet, daß** beide Luftführungskanäle (50, 52) starr sind.

3. Bremskraftverstärker nach Anspruch 1 oder 2,
**dadurch gekennzeichnet, daß** der erste und/oder der zweite Luftführungskanal (50, 52) einstückig mit dem Gehäuse (48) ausgebildet ist/sind.

4. Bremskraftverstärker nach einem der Ansprüche 1 bis 3,
**dadurch gekennzeichnet, daß** in dem Gehäuse (48) Haltearme (94) für den Differenzdrucksensor (56) vorhanden sind, die vorzugsweise einstückig mit dem Gehäuse (48) und/oder den Luftführungskanälen (50, 52) ausgebildet sind.

5. Bremskraftverstärker nach einem der vorhergehenden Ansprüche,
**dadurch gekennzeichnet, daß** die beiden Luftführungskanäle (50, 52) ineinander angeordnet sind.

6. Bremskraftverstärker nach Anspruch 5,
**dadurch gekennzeichnet, daß** ein Luftführungskanal (50, 52) den anderen Luftführungskanal (52, 50) koaxial umgibt.

7. Bremskraftverstärker nach einem der vorhergehenden Ansprüche,
**dadurch gekennzeichnet, daß** die Luftführungskanäle (50, 52) mittels eines vorzugsweise umlaufenden Rastvorsprunges (78) im Bremskraftverstärkergehäuse (12) verrastbar sind.

8. Bremskraftverstärker nach einem der vorhergehenden Ansprüche,
**dadurch gekennzeichnet, daß** der erste Luftführungskanal (50) in seinem arbeitskammerseitigen Endabschnitt mit radialen, die Kanalwandung durchsetzenden Öffnungen (58) zur Fluidverbindung der Arbeitskammer (16, 16') mit dem ersten Luftführungskanal (50) versehen ist.

9. Bremskraftverstärker nach einem der vorhergehenden Ansprüche,
**dadurch gekennzeichnet, daß** zumindest einer der beiden Luftführungskanäle (50, 52) so dimensioniert ist, daß er auch von der Sensoranordnung (46) zu einer elektromagnetischen Betätigungseinheit (26) des Bremskraftverstärkers (10) führende Verbindungsleitungen (84) aufnehmen kann.

10. Bremskraftverstärker nach einem der vorhergehenden Ansprüche,
**dadurch gekennzeichnet, daß** ein stecker- oder buchsenartig ausgebildeter Anschluß (64) für einen weiteren Sensor, vorzugsweise einen Drucksensor (66) vorhanden ist, insbesondere auf der den Luftführungskanälen (50, 52) gegenüberliegenden Seite der Sensoranordnung (46).

11. Bremskraftverstärker nach einem der vorhergehenden Ansprüche,
**dadurch gekennzeichnet, daß** in dem Gehäuse (48) eine elektronische Steuereinheit angeordnet ist.

12. Bremskraftverstärker nach einem der vorhergehenden Ansprüche,
**dadurch gekennzeichnet, daß** die Sensoranordnung (46) am Bremskraftverstärker (10) durch einen oder mehrere Rastvorsprünge (78, 78') befestigt ist, die auf der Außenseite des Luftführungskanals (52) oder der Luftführungskanäle (50, 52) umlaufend ausgebildet sind und die im Bremskraftverstärkergehäuse (12) hinter Gummimuffen (82, 82'), welche in Durchgangsöffnungen (80, 80') in der Bremskraftverstärkergehäusewandung für die Luftführungskanäle (50, 52) eingesetzt sind, abdichtend verrastet sind.

13. Bremskraftverstärker nach einem der vorhergehenden Ansprüche,
**dadurch gekennzeichnet, daß** der in der Arbeitskammer (16, 16') angeordnete Endabschnitt des ersten Luftführungskanals (50) die Kanalwandung durchsetzende Öffnungen (58) aufweist, die eine Fluidverbindung zwischen der Arbeitskammer (16, 16') und dem ersten Luftführungskanal (50) herstellen, und daß der erste Luftführungskanal (50) durch einen Elastomerbalg (86) fortgesetzt ist, dessen eines Ende am freien Ende des ersten Luftführungskanals (50) und dessen anderes Ende in der von der Sensoranordnung (46) entfernten, gegenüberliegenden Wandung des Bremskraftverstärkergehäuses (12) abdichtend angebracht ist.

14. Bremskraftverstärker nach einem der vorhergehenden Ansprüche in Verbindung mit Anspruch 10,
**dadurch gekennzeichnet, daß** mit dem stecker- oder buchsenartigen Anschluß (64) der Sensoranordnung (46) für einen weiteren Sensor ein Drucksensor (66) mit einem V-förmig gewinkelten Sensorgehäuse (70) verbunden ist, der einen zum stecker- oder buchsenartigen Anschluß (64) der Sensoranordnung (46) korrespondierenden Anschluß am freien Ende des einen Schenkels (68) des V-förmigen Sensorgehäuses (70) und einen Anschluß (74) zur Fluidverbindung mit einem Hauptbremszylinder (11) am freien Ende des anderen Schenkels (72) des V-förmigen Sensorgehäuses (70) aufweist.

15. Bremskraftverstärker nach einem der vorhergehenden Ansprüche,
**dadurch gekennzeichnet, daß** der Bremskraftverstärker eine elektromagnetische Betätigungseinheit (26) aufweist, die eine fußkraftunabhängige Betätigung des Bremskraftverstärkers ermöglicht.

## Claims

1. A vacuum brake booster (10) having a housing (12) which comprises at least one vacuum chamber (18 or 18') and one working chamber (16 or 16') which is separated therefrom by a movable wall (14 or 14') and which is adapted to be optionally connected to vacuum or at least atmospheric pressure, and a sensor assembly (46) comprising a differential pressure sensor (56),
**characterised in that**
the sensor assembly (46) comprises
- a housing (48) that is arranged outside the brake booster housing (12) in which the differential pressure sensor (56) is arranged,
- a first air duct (50) connected to the differential pressure sensor (56), the length of which is sufficient to extend from the sensor assembly (46) as far as into the working chamber (16, 16') of the brake booster (10), and
- a second air duct (52) connected with the differential pressure sensor (56), the length of which is sufficient to extend from the sensor assembly (46) as far as into the vacuum chamber (18 or 18') of the brake booster (10),
and **in that** the housing (48) of the sensor assembly (46) carries both air ducts (50, 52) and is attached at the brake booster (10) by means of the air ducts (50, 52).

2. The brake booster according to Claim 1,
**characterised in that** the two air ducts (50, 52) are rigid.

3. The brake booster according to Claim 1 or 2,
**characterised in that** the first and/or the second air duct(s) (50, 52) is/are formed integrally with the housing (48).

4. The brake booster according to one of Claims 1 to 3,
**characterised in that** retaining arms (94) for the differential pressure sensor (56) are provided in the housing (48), which are preferably formed integrally with the housing (48) and/or the air ducts (50, 52).

5. The brake booster according to one of the previous claims,
**characterised in that** the two air ducts (50, 52) are arranged one inside the other.

6. The brake booster according to Claim 5,
**characterised in that** one air duct (50 or 52) coaxially surrounds the other air duct (50, 52).

7. The brake booster according to one of the previous claims,
**characterised in that** the air ducts (50, 52) are adapted to be locked in the brake booster housing (12) by means of a preferably circumferential locking projection (78).

8. The brake booster according to one of the previous claims,
**characterised in that** the first air duct (50) is provided with radial openings (58) in its end section facing the working chamber, which penetrate the duct wall for fluid connection of the working chamber (16 or 16') with the first air duct (50).

9. The brake booster according to one of the previous claims,
**characterised in that** at least one of the two air ducts (50, 52) is dimensioned such that it can also accommodate connecting lines (84) which lead from the sensor assembly (46) to an electromagnetic actuation unit (26) of the brake booster (10).

10. The brake booster according to one of the previous claims,
**characterised in that** a plug-type or socket-type connector (64) is provided for a further sensor, preferably a pressure sensor (66), in particular on the side of the sensor assembly (46) that is opposite the air ducts (50, 52).

11. The brake booster according to one of the previous claims,
**characterised in that** an electronic controller is arranged in the housing (48).

12. The brake booster according to one of the previous claims,
**characterised in that** the sensor assembly (46) is attached at the brake booster (10) by one or several locking projections (78, 78') which are formed circumferentially on the outer surface of the air duct (52) or of the air ducts (50, 52) and which are sealingly locked with the brake booster housing (12) behind rubber sleeves (82, 82') which are fitted in passages (80, 80') for air ducts (50, 52) formed in the brake booster housing wall.

13. The brake booster according to one of the previous claims,
**characterised in that** the end section of the first air duct (50) which is arranged in the working chamber (16, 16') comprises openings (58) penetrating the duct wall, which provide a fluid connection between the working chamber (16 or 16') and the first air duct (50), and that the first air duct (50) is continued by an elastomeric bellows (86), the one end of which is sealingly attached at the free end of the first air duct (50) and the other end of which is sealingly attached in the wall of the brake booster housing (12) remote from and opposite to the sensor assembly (46).

14. The brake booster according to one of the previous claims in connection with Claim 10,
**characterised in that** a pressure sensor (66) having a V-shaped angled sensor housing (70) is connected by means of the plug-type or socket-type connector (64) for a further sensor of the sensor assembly (46), which pressure sensor (66) comprises, at the free end of the one leg (68) of the V-shaped sensor housing (70), a connector corresponding to the plug-type or socket-type connector (64) of the sensor assembly (46) and, at the free end of the other leg (72) of the V-shaped sensor housing (70), a connector (74) for the fluid connection with a master cylinder (11).

15. The brake booster according to one of the previous claims,
**characterised in that** the brake booster comprises an electromagnetic actuation unit (26) which enables a leg-force independent actuation of the brake booster.

## Revendications

1. Servofrein à dépression (10), comprenant un boîtier (12) qui présente au moins une chambre de dépression (18, 18') et une chambre de travail (16, 16') séparée de celle-ci par une paroi mobile (14, 14') qui peut être mise en communication au choix avec une dépression ou avec une pression au moins égale à la pression atmosphérique, et comprenant un dispositif de détection (46) présentant un capteur de différence de pression (56)
**caractérisé en ce que**
le dispositif de détection (46) présente
- un boîtier (48) disposé à l'extérieur du boîtier de servofrein (12), dans lequel est disposé le capteur de différence de pression (56),
- un premier canal d'air (50) relié au capteur de différence de pression (56), dont la longueur suffit pour qu'il s'étende du dispositif de détection (46) jusque dans la chambre de travail (16, 16') du servofrein (10), et
- un deuxième canal d'air (52) relié au capteur de différence de pression (56) dont la longueur suffit pour qu'il s'étende du dispositif de détection (46) jusque dans la chambre de dépression (18, 18') du servofrein (10),
et **en ce que** le boîtier (48) du dispositif de détection (46) porte les deux canaux d'air (50, 52) et est fixé au servofrein (10) au moyen des canaux d'air (50, 52).

2. Servofrein selon la revendication 1,
**caractérisé en ce que** les deux canaux d'air (50, 52) sont rigides.

3. Servofrein selon la revendication 1 ou 2,
**caractérisé en ce que** le premier et / ou le deuxième canal d'air (50, 52) est d'une seule pièce avec le boîtier (48).

4. Servofrein selon l'une quelconque des revendications 1 à 3, **caractérisé en ce qu'**il y a dans le boîtier (48), des bras de maintien (94) pour le capteur de différence de pression (56) qui sont de préférence d'une seule pièce avec le boîtier (48) et / ou les canaux d'air (50, 52).

5. Servofrein selon l'une quelconque des revendications précédentes,
**caractérisé en ce que** les deux canaux d'air (50, 52) sont disposés l'un dans l'autre.

6. Servofrein selon la revendication 5,
**caractérisé en ce qu'**un canal (50, 52) entoure de façon coaxiale l'autre canal (52, 50).

7. Servofrein selon l'une quelconque des revendications précédentes,
**caractérisé en ce que** les canaux d'air (50, 52) peuvent être enclenchés au moyen d'une partie en saillie d'enclenchement (78) de préférence périphérique dans le boîtier de servofrein (12).

8. Servofrein selon l'une quelconque des revendications précédentes,
**caractérisé en ce que** le premier canal d'air (50) est pourvu dans sa portion d'extrémité située du côté de la chambre de travail d'ouvertures radiales (58) traversant la paroi de canal d'air pour mettre en communication par fluide la chambre de travail (16, 16') avec le premier canal d'air (50).

9. Servofrein selon l'une quelconque des revendications précédentes,
**caractérisé en ce qu'**au moins un des deux canaux d'air (50, 52) est dimensionné de telle façon qu'il puisse aussi loger les câbles de raccordement (84) menant du dispositif de détection (46) à une unité d'actionnement (26) électromagnétique du servofrein (10).

10. Servofrein selon l'une quelconque des revendications précédentes,
**caractérisé en ce qu'**il y a un raccord (64) sous forme de douille ou de fiche pour un autre capteur, de préférence un capteur de pression (66), en particulier du côté du dispositif de détection (46) faisant face aux canaux d'air (50, 52).

11. Servofrein selon l'une quelconque des revendications précédentes,
**caractérisé en ce qu'**une unité de commande électronique est disposée dans le boîtier (48).

12. Servofrein selon l'une quelconque des revendications précédentes,
**caractérisé en ce que** le dispositif de détection (46) est fixé au servofrein (10) par une ou plusieurs parties en saillies d'enclenchement (78, 78') qui sont formées périphériquement sur la face extérieure du canal d'air (52) ou des canaux d'air (50, 52) et qui sont enclenchées de façon à réaliser une étanchéité dans le boîtier de servofrein (12) derrière des manchons en caoutchouc (82, 82') qui sont montés dans des ouvertures de passage (80, 80') dans la paroi du boîtier du servofrein pour les canaux d'air (50, 52).

13. Servofrein selon l'une quelconque des revendications précédentes,
**caractérisé en ce que** la portion d'extrémité disposée dans la chambre de travail (16, 16') du premier canal d'air (50) présente des ouvertures (58) traversant la paroi de canal d'air qui établissent une communication par fluide entre la chambre de travail (16, 16') et le premier canal d'air (50), et **en ce que** le premier canal d'air (50) se poursuit par un soufflet en élastomère (86) dont une extrémité est installée de façon à réaliser une étanchéité à l'extrémité libre du premier canal d'air (50) et son autre extrémité est installée de façon à réaliser une étanchéité dans la paroi opposée, éloignée du dispositif de détection (46) du boîtier de servofrein (12).

14. Servofrein selon l'une quelconque des revendications précédentes en combinaison avec la revendication 10,
**caractérisé en ce qu'**un capteur de pression (66) comprenant un boîtier de capteur (70) plié en forme de V est relié avec le raccord (64) sous forme de douille ou de fiche du dispositif de détection (46) pour un autre capteur, qui présente un raccord correspondant au raccord (64) sous forme de douille ou de fiche du dispositif de détection (46) à l'extrémité libre d'une branche (68) du boîtier de capteur (70) en forme de V et un raccord (74) pour la communication par fluide avec un maître cylindre de frein (11) à l'extrémité libre de l'autre branche (72) du boîtier de capteur (70) en forme de V.

15. Servofrein selon l'une quelconque des revendications précédentes,
**caractérisé en ce que** le servofrein présente une unité d'actionnement (26) électromagnétique qui permet un actionnement du servofrein indépendant de la force exercée par le pied.
